# EUROPÄISCHE PATENTSCHRIFT

(11) **EP 1 191 643 B1**
(45) Veröffentlichungstag und Bekanntmachung des Hinweises auf die Patenterteilung: **27.10.2004**
(21) Anmeldenummer: 01122093.6
(22) Anmeldetag: 14.09.2001
(51) Int. Cl.: H01R 13/66, H01R 9/26

(54) **Gehäuse für ein elektronisches Gerät**
Housing for an electronic apparatus
Boîtier pour un dispositif électronique

(30) Priorität: 25.09.2000 DE 10047676
(43) Veröffentlichungstag der Anmeldung: 27.03.2002
(73) Patentinhaber: PHOENIX CONTACT GmbH & Co. Kg, 32825 Blomberg (DE); Keba AG, 4041 Linz (AT)
(72) Erfinder: Quardt, Dirk, Dipl.-Ing., Schieder-Schwalenberg (DE); Söfker, Jörg, Dipl.-Ing., 32657 Lemgo (DE); Starzinger, Reinhard Gottlieb, Ing., 4861 Schörfling a. A. (AT); Wintersteiger, Hans Peter, Ing., 4232 Hagenberg (AT)
(74) Vertreter: Gesthuysen, von Rohr & Eggert

(56) Entgegenhaltungen:
- EP-A- 0 233 458
- EP-A- 0 300 065
- FR-A- 2 300 290
- FR-A- 2 526 261
- FR-A- 2 733 361
- US-A- 4 018 413

## Beschreibung

Die Erfindung betrifft ein Gehäuse für ein elektronisches Gerät zum lösbaren Aufsetzen auf eine Tragschiene, mit einem in der Gehäuseunterseite angeordneten Verriegelungselement, wobei das Verriegelungselement aus einer ersten Stellung, in der das Gehäuse auf der Tragschiene befestigbar ist, in eine zweite Stellung, in der das Gehäuse von der Tragschiene abhebbar ist, verbringbar ist.

Mit dem Trend zur Dezentralisierung von Elektronik direkt in den Prozeß sowie der Miniaturisierung von Elektronikbaugruppen zu kompakten, montagefreundlichen Geräten werden zunehmend geeignete Elektronikgehäuse benötigt, wobei in der Regel dann auch die Anschlußtechnik in dem Gehäuse integriert ist. Die einzelnen Gehäuse werden dann bevorzugt über ein Bus-System miteinander und mit einer Steuerung verbunden. Der Gesamtaufbau der Gehäuse muß dabei so beschaffen sein, daß eine direkte Montage des Gehäuses auf einer Tragschiene möglich ist.

Hierbei gibt es nun je nach Anwendungsfall eine Vielzahl von unterschiedlichen Gehäuseformen, die sich in ihrer Größe, ihrem Aufbau und ihrer Funktion unterscheiden. Gemeinsam ist all diesen Gehäusen, daß in ihrem Inneren elektronische Baugruppen, meist in Form von Leiterplatten, angeordnet sind, welche durch das Gehäuse vor Berührung und Schmutz geschützt werden. Derartige Gehäuse sind meist modular aufgebaut, wobei die Gehäuse insbesondere nach dem Baukastenprinzip ausgeführt sind, so daß sich die einzelnen Gehäuseteile individuell und schnell zu einem optimalen Gehäuse zusammenstellen lassen. Häufig bestehen die Gehäuse aus einem Gehäuseoberteil und einem Gehäuseunterteil, wobei das Gehäuseoberteil Anschlüsse für elektrische Leitungen aufweist, die Anschlüsse über Steckerkontakte mit dem Gehäuseunterteil verbunden sind und das Gehäuseunterteil die Verbindung zu einem Bus-System herstellt. Die einzelnen Gehäuse sind dabei so ausgebildet, daß mehrere Gehäuse benachbart zueinander auf einer Tragschiene aufrastbar sind, so daß mehrere Gehäuse zusammen einen Gehäuseblock bilden. Dabei sind die einzelnen benachbarten Gehäuse bzw. die einzelnen benachbarten elektronischen Geräte vorzugsweise elektrisch miteinander kontaktierbar.

Die Befestigung derartiger Gehäuse auf der Tragschiene erfolgt nun dadurch, daß in der Gehäuseunterseite ein Verriegelungselement angeordnet ist, wobei das Verriegelungselement dann, wenn das Gehäuse auf der Tragschiene auf gesetzt ist, mit der Tragschiene verrastet. Um das Gehäuse - und damit auch das elektronische Gerät - von der Tragschiene zu lösen, muß die zuvor beschriebene Verrastung gelöst werden, wozu das in der Regel federbeaufschlagte Verriegelungselement gegen seine Federkraft zurückgezogen werden muß.

Bei dem bekannten Gehäuse, von dem die Erfindung ausgeht ("PHOENIX CONTACT - Katalog 10 ELEKTRONIKGEHÄUSE" 98/99, Seite 46 bis 49), wird das Verriegelungselement durch das Einstecken der Spitze eines Schraubendrehers in eine dafür vorgesehene Öffnung am Verriegelungselement zurückgezogen, so daß das Verriegelungselement die Tragschiene freigibt und das elektronische Gerät von der Tragschiene abgehoben werden kann. Nachteilig ist hierbei jedoch, daß das Verriegelungselement zum Abheben des Gehäuses bzw. des elektronischen Geräts von der Tragschiene in der geöffneten Stellung gehalten werden muß. Dies ist insbesondere dann schwierig, wenn das in der Gehäuseunterseite angeordnete Verriegelungselement aufgrund beengter Platzverhältnisse nur schwer zugänglich ist und somit die Gefahr besteht, daß ein in die Öffnung im Verriegelungselement eigesteckter Schraubendreher schnell wieder aus der Öffnung herausrutscht, so daß das Gehäuse erneut auf der Tragschiene verrastet. Schließlich ist es bei dem bekannten Gehäuse kaum möglich, mehrere Gehäuse gleichzeitig von der Tragschiene abzuheben.

Ein Gehäuse für ein elektronisches Gerät zum lösbaren Aufsetzen auf eine Tragschiene gemäß Oberbegrift des Anspruchs 1 ist aus GB-A-2 205 997 bekannt.

Der vorliegenden Erfindung liegt somit die Aufgabe zugrunde, das Aufsetzen und insbesondere das Lösen des eingangs beschriebenen Gehäuses von einer Tragschiene zu erleichtern.

Die zuvor hergeleitete und aufgezeite Aufgabe ist zunächst gelöst, durch ein Gehäuse für ein elektronisches Gërat, gemäß Anspruch 1. Erfindungsgemäß wird somit erreicht, daß dann, wenn ein Benutzer das Verriegelungselement des Gehäuses einmal in die zweite Stellung, also in die geöffnete Stellung, gebracht hat, ein anschließendes ungewolltes erneutes Verrasten des Gehäuses auf der Tragschiene vermieden wird. Der Benutzer muß das Verriegelungselement somit nur einmal aus der ersten Stellung in die zweite Stellung bringen, woraufhin das Verriegelungselement dann durch das Rückhaltelement in der zweiten Stellung fixiert wird. Beim Abheben des Gehäuses von der Tragschiene ist es somit nicht mehr erforderlich, daß das Verriegelungselement noch vom Benutzer in der geöffneten Stellung gehalten wird. Der Benutzer kann somit das Gehäuse einfach mit einer Hand von der Tragschiene abheben. Dadurch ergibt sich insbesondere die Möglichkeit, mehrere Gehäuse und damit mehrere elektronische Geräte gleichzeitig von der Tragschiene zu lösen.

Vorteilhafterweise ist das Verriegelungselement - wie an sich im Stand der Technik bekannt - derart ausgebildet, daß es eine Rastnase aufweist und die Rastnase in der ersten Stellung des Verriegelungselements eine Kante der Tragschiene untergreift. Ein derartiges Verriegelungselement mit einer Rastnase läßt sich zum einen einfach herstellen, zum anderen ist dadurch eine ausreichende Sicherung des Gehäuses gegen unbeabsichtigtes Lösen gegeben. Herstellungstechnisch weiter vorteilhaft ist es darüber hinaus, wenn dem Verriegelungselement ein Federelement zugeordnet ist, durch das das Verriegelungselement in der ersten Stellung gegen die Kante der Tragschiene gedrückt wird. Zum einen läßt sich ein solches Federelement leicht herstellen, zum anderen ist auch die Auswechslung eines defekten Federelements möglich, ohne daß das gesamte Verriegelungselement ausgetauscht werden muß.

Weiter vorteilhaft ist es, wenn das Rückhaltelement als federndes Metallteil ausgebildet ist, wodurch das Rückhaltelement besonders einfach, beispielsweise durch Ausstanzen, hergestellt werden kann. Die Fixierung des Verriegelungselements in der zweiten Stellung durch das Rückhaltelement kann dadurch besonders leicht realisiert werden, daß das Rückhaltelement einen im wesentlichen parallel zum Verriegelungselement verlaufenden Federabschnitt und einen im wesentlichen senkrecht dazu verlaufenden Rückhaltabschnitt aufweist, wobei der Federabschnitt in der ersten Stellung gegen seine Federkraft ausgelenkt und in der zweiten Stellung entspannt ist und der Rückhaltabschnitt in der ersten Stellung mit seiner unteren Kante auf der Kante der Tragschiene aufsitzt und in der zweiten Stellung vor der Rastnase des Verriegelungselements angeordnet ist. Durch eine derartige Ausgestaltung des Rückhaltelements ist gewährleistet, daß dieses seine erfindungsgemäße Funktion quasi selbsttätig erfüllt, ohne daß das Rückhaltelement separat von einem Benutzer betätigt werden muß. Zur Auslenkung des Rückhaltelement und zur Festsetzung des Rückhaltelements in der ersten Stellung, also der ausgelenkten Stellung, wird die Kante der Tragschiene eingesetzt, so daß auch hierfür kein zusätzliches Bauteil erforderlich ist.

Gemäß einer letzten vorteilhaften Ausgestaltung des erfindungsgemäßen Gehäuses, die hier noch kurz erwähnt werden soll, ist das Verriegelungselement über eine Betätigungshilfe betätigbar, wobei die Betätigungshilfe mit dem Verriegelungselement mechanisch verbunden ist. Betätigung des Verriegelungselements bedeutet dabei, daß das Verriegelungselement aus der ersten Stellung, in der das Gehäuse auf der Tragschiene befestigt ist, in die zweite Stellung, in der das Gehäuse von der Tragschiene abhebbar ist, gebracht wird. Durch die Ausbildung einer Betätigungshilfe, welche vorzugsweise an dem dem Verriegelungselement abgewandten Ende einen Griffabschnitt aufweist, wird die Betätigung des Verriegelungselements für den Benutzer erleichtert. Dadurch, daß das Verriegelungselement funktionsnotwendigerweise in der Gehäuseunterseite angeordnet ist, ist es für einen Benutzer in der Regel nur relativ schwer zugänglich. Durch die Ausbildung einer Betätigungshilfe ist es nun möglich, daß der Benutzer das Verriegelungselement über die Betätigungshilfe an einer leichter zugänglichen Stelle, beispielsweise in der Nähe der Gehäuseoberseite, betätigen kann.

Im einzelnen gibt es nun eine Vielzahl von Möglichkeiten, das erfindungsgemäße Gehäuse für ein elektronisches Gerät auszugestalten und weiterzubilden. Dazu wird verwiesen auf die dem Patentanspruch 1 nachgeordneten Patentansprüche sowie auf die Beschreibung eines bevorzugten Ausführungsbeispiels in Verbindung mit der Zeichnung. In der Zeichnung zeigen
- Fig. 1: einen Teil eines erfindungsgemäßen Gehäuses, wobei das Gehäuse auf einer Tragschiene befestigt ist, sich das Verriegelungselement somit in der ersten Stellung, der verriegelten Stellung, befindet,
- Fig. 2: den Teil eines erfindungsgemäßen Gehäuses gemäß Fig. 1, wobei sich das Gehäuse zwar auf der Tragschiene befindet, das Gehäuse jedoch nicht mehr mit der Tragschiene verriegelt ist,
- Fig. 3: der in den Fig. 1 und 2 dargestellte Teil eines erfindungsgemäßen Gehäuses, losgelöst von einer Tragschiene, und
- Fig. 4: eine Explosionsdarstellung des in den Fig. 1 bis 3 dargestellten Teils des erfindungsgemäßen Gehäuses.

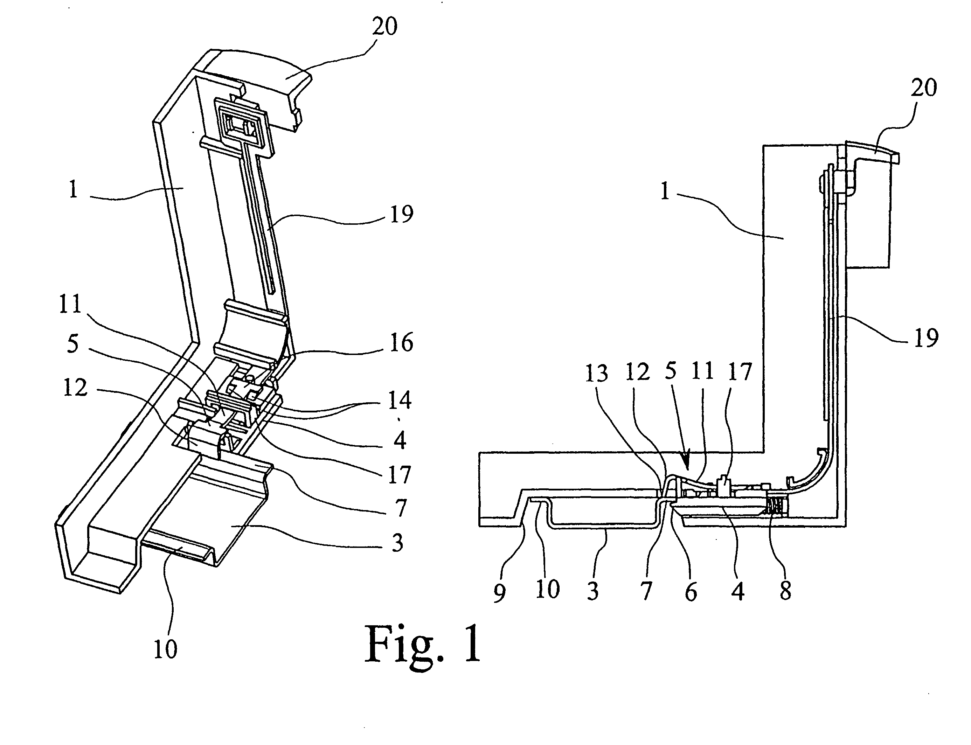

Die Figuren zeigen einen Teil eines Gehäuses eines elektronischen Geräts, wobei das Gehäuse in dem hier dargestellten Ausführungsbeispiel aus zumindest zwei seitlichen Gehäuseteilen 1, 2 besteht. Die Fig. 1 bis 3 zeigen den Teil des Gehäuses jeweils als Seitenansicht und als perspektivische Darstellung. In das Gehäuse wird die Elektronik des elektronischen Geräts, beispielsweise in Form einer Leiterplatte, eingesetzt. Außer dem in den Figuren dargestellten Gehäuse mit zwei seitlichen Gehäuseteilen 1, 2, kann das Gehäuse auch aus mehreren Gehäuseteilen oder beispielsweise auch aus einem Gehäuseoberteil und einem Gehäuseunterteil bestehen, wobei dann in der Regel das Gehäuseoberteil Anschlüsse für elektrische Leitungen aufweist.

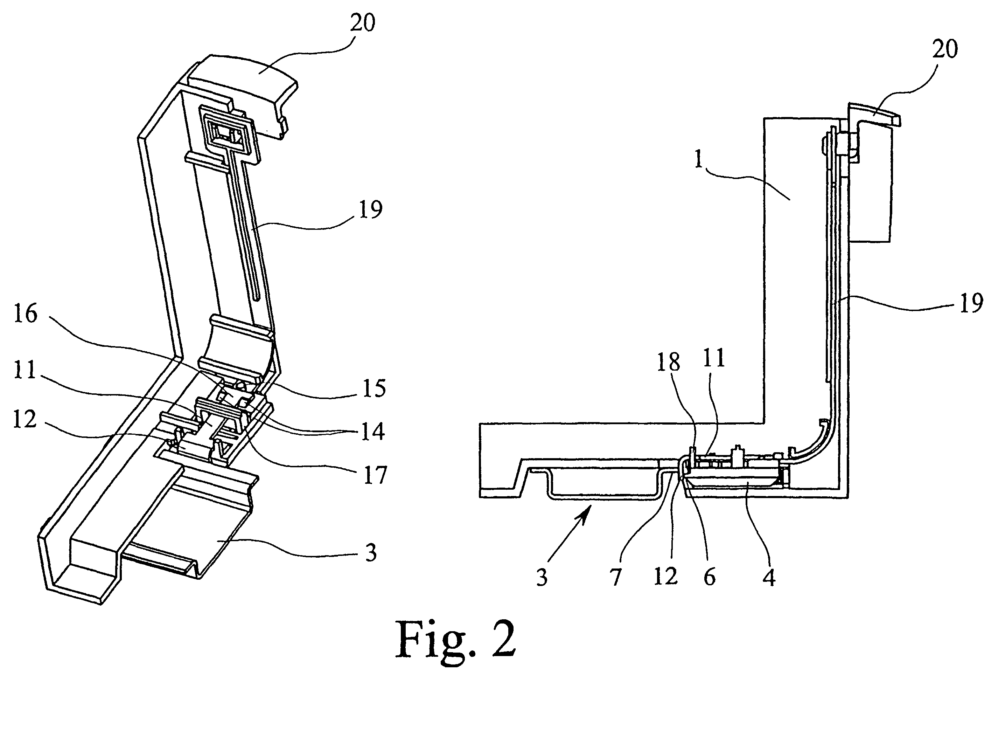

Wesentlich für die Ausbildung des Gehäuses ist dabei lediglich, daß das Gehäuse zum lösbaren Aufsetzen auf eine Tragschiene 3 geeignet ist, wozu ein Verriegelungselement 4 in der Gehäuseunterseite angeordnet ist. Das Verriegelungselement 4 ist dabei derart beweglich in dem Gehäuse angeordnet, daß es aus seiner ersten Stellung, in der das Gehäuse auf der Tragschiene 3 befestigt ist (Fig. 1), in eine zweite Stellung, in der das Gehäuse von der Tragschiene 3 abgehoben werden kann (Fig. 2), verschoben werden kann. Dabei wird das Verriegelungselement 4 durch ein beliebiges Federelement in der ersten Stellung gehalten, so daß nur durch Aufwendung einer der Federkraft des Federelements entgegenwirkenden Kraft das Verriegelungselement 4 aus der ersten Stellung in die zweite Stellung gebracht werden kann. Wird diese Kraft nicht dauerhaft aufrecht erhalten, so schnellt das Verriegelungselement 4 wieder in die erste Stellung zurück und das Gehäuse ist wieder auf der Tragschiene 3 verriegelt.

Erfindungsgemäß ist dem Verriegelungselement 4 nun ein Rückhaltelement 5 zugeordnet, wobei das Verriegelungselement 4 durch das Rückhaltelement 5 in der zweiten Stellung fixiert wird. Hierdurch wird erreicht, daß dann, wenn das Verriegelungselement 4 einmal in seine zweite Stellung, die geöffnete Stellung, gebracht worden ist, das Verriegelungselement 4 nicht wieder in die erste Stellung, die verriegelte Stellung, zurückspringt, wodurch das Gehäuse erneut auf der Tragschiene 3 verrastet würde.

Zur Verriegelung des Gehäuses auf der Tragschiene 3 ist an der einen Stirnseite des Verriegelungselements 4 eine Rastnase 6 ausgebildet, die in der ersten Stellung des Verriegelungselements 4 eine Kante 7 der Tragschiene 3 untergreift. Durch die Federkraft einer Feder 8, welche sich einerseits im Gehäuse abstützt, andererseits an der zweiten Stirnseite des Verriegelungselements 4 anliegt, wird das Verriegelungselement 4 gegen die Tragschiene 3 gedrückt, wobei die Rastnase 6 die Kante 7 der Tragschiene 3 untergreift, so daß ein Abheben des Gehäuses von der Tragschiene 3 verhindert wird. Zum Lösen des Gehäuses von der Tragschiene 3 muß nun das Verriegelungselement 4 entgegen der Federkraft der Feder 8 von der Tragschiene 3 zurückgezogen werden, so daß die Rastnase 6 die Kante 7 der Tragschiene 3 frei gibt.

Um ein ungewolltes Lösen des Gehäuses durch Kippen des Gehäuses von der Tragschiene 3 zu verhindern, ist in der Regel - anders als in dem hier dargestellten Ausführungsbeispiel - auf der dem Verriegelungselement 4 gegenüberliegenden Seite 9 des Gehäuseunterteils eine Ausnehmung vorgesehen, in die die zweite Kante 10 der Tragschiene 3 eingreift.

Wird das Verriegelungselement 4 entgegen der Federkraft der Feder 8 zurückgezogen, so gibt die Rastnase 6 die Kante 7 der Tragschiene 3 frei und das Gehäuse kann von der Tragschiene 3 abgehoben werden. Voraussetzung hierfür ist jedoch, daß das Verriegelungselement 4 dauerhaft in der zweiten Stellung, der geöffneten Stellung, gehalten wird, d. h. daß das Verriegelungselement 4 gegen die Federkraft der Feder 8 zurückgezogen bleibt. Durch das erfindungsgemäß vorgesehene Rückhaltelement 5 ist es nun nicht mehr erforderlich, daß der Benutzer das Verriegelungselements 4 dauerhaft zurückhält, sondern das Verriegelungselement 4 wird nach einem einmaligen, kurzen Zurückziehen des Verriegelungselements 4 durch das Rückhaltelement 5 in der zweiten, in Fig. 2 dargestellten Stellung fixiert.

Im Ausführungsbeispiel ist das Rückhaltelement 5 als federndes Metallteil ausgebildet, wobei das Rückhaltelement 5 einen im wesentlichen parallel zum Verriegelungselement 4 verlaufenden Federabschnitt 11 und einen im wesentlichen senkrecht dazu verlaufenden Rückhaltabschnitt 12 aufweist. Ist das Gehäuse auf der Tragschiene 3 aufgerastet, befindet sich das Verriegelungselement 4 also in der ersten Stellung, so sitzt die untere Kante 13 des Rückhaltabschnitts 12 auf der Kante 7 der Tragschiene 3 auf, wodurch der Federabschnitt 11 des Rückhaltelements 5 entgegen seiner Federkraft ausgelenkt wird. Hierdurch wird zunächst erreicht, daß der Rückhaltabschnitt 12 nicht vor der Rastnase 6 des Verriegelungselements 4 angeordnet ist, wodurch verhindert würde, daß die Rastnase 6 die Kante 7 der Tragschiene 3 untergreift. Durch das Aufsitzen der unteren Kante 13 des Rückhaltabschnitts 12 auf der Kante 7 der Tragschiene 3 wird das Gehäuse sogar zusätzlich auf der Tragschiene 3 befestigt, da die Kante 7 der Tragschiene 3 zwischen der unteren Kante 13 des Rückhaltabschnitts 12 und der Rastnase 6 des Verriegelungselements 4 eingeklemmt wird.

Soll nun das Gehäuse von der Tragschiene 3 gelöst werden (vgl. Fig. 2), so muß das Verriegelungselement 4 gegen die Federkraft der Feder 8 zurückgezogen werden. Dadurch wird auch das auf dem Verriegelungselement 4 befestigte Rückhaltelement 5 zurückgezogen, so daß der Federabschnitt 11 aus seiner zunächst ausgelenkten Position in die entspannte Position zurückschnellt, sobald die untere Kante 13 des Rückhaltabschnitts 12 das Ende der Kante 7 der Tragschiene 3 erreicht hat. Befindet sich der Federabschnitt 11 des Rückhaltelements 5 in seiner entspannten Position, d. h. verläuft der Federabschnitt 11 parallel zum Verriegelungselement 4, so ist der Rückhaltabschnitt 12 senkrecht vor der Rastnase 6 des Verriegelungselements 4 angeordnet, so daß das Verriegelungselement 4 nicht mehr durch die Federkraft der Feder 8 in die Verriegelungsstellung zurückgedrückt werden kann. Mit dem einmaligen Zurückziehen des Verriegelungselements 4 durch den Benutzer wird gleichzeitig das Rückhaltelement 5 betätigt, da der Federabschnitt 11 aufgrund seiner eigenen Federkraft in die entspannte Position zurückschnellt, sobald die untere Kante 13 des Rückhaltabschnitts 12 nicht mehr auf der Kante 7 der Tragschiene 3 aufsitzt. In der in Fig. 2 dargestellten Position ist das Verriegelungselement 4 somit in der zweiten Stellung, der geöffneten Stellung, fixiert, so daß das Gehäuse von der Tragschiene abgehoben werden kann, ohne daß der Benutzer das Verriegelungselement 4 weiter zurückziehen muß.

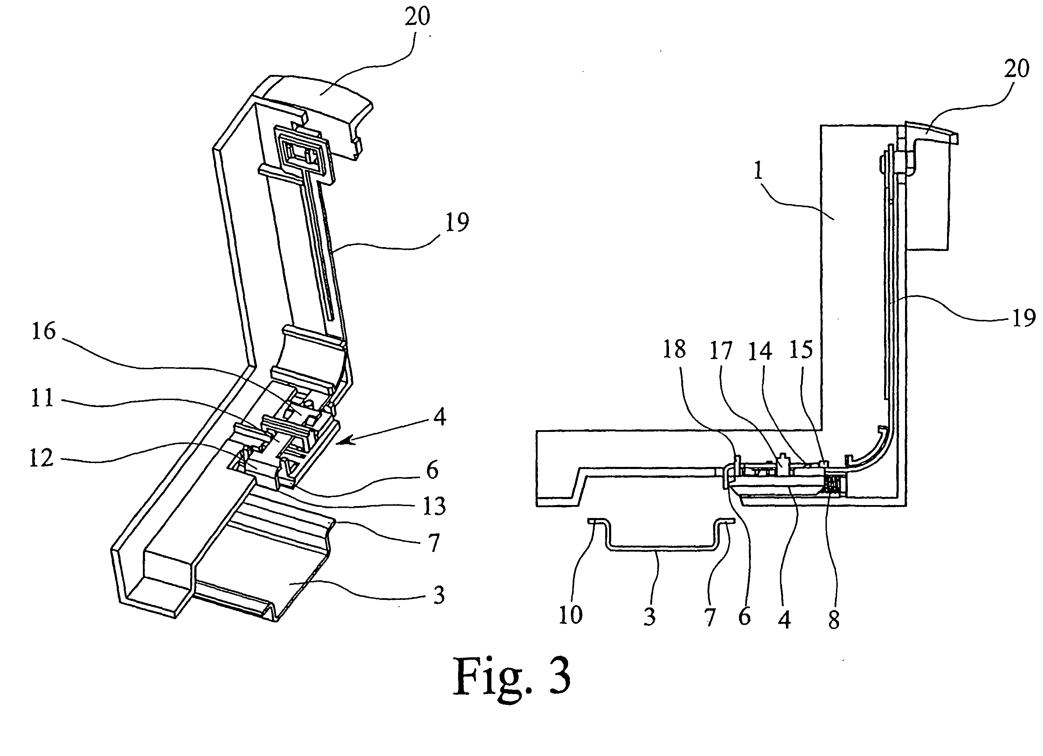

Ist das Gehäuse von der Tragschiene abgehoben (Fig. 3), so befindet sich das Rückhaltelement 5 weiter in seiner entspannten Position, so daß sich der Rückhaltabschnitt 12 senkrecht vor der Rastnase 6 des Verriegelungselements 4 befindet. Um das Gehäuse nun wieder auf die Tragschiene 3 aufzurasten, muß das Gehäuse nur aus der in Fig. 3 dargestellten Position senkrecht nach unten auf die Tragschiene 3 gesetzt werden. Aufgrund der schrägen Unterkante der Rastnase 6 wird dabei das Verriegelungselement 4 gegen die Federkraft der Feder 8 nach hinten geschoben, bis die untere Kante 13 des Rückhaltabschnitts 12 auf der Kante 7 der Tragschiene 3 aufsitzt. Wird das Gehäuse weiter nach unten gedrückt, so wird der Rückhaltabschnitt 12 nach oben in das Gehäuse geschoben, so daß die Rastnase 6 des Verriegelungselements 4 frei gegeben wird und aufgrund der Federkraft der Feder 8 wieder die Kante 7 der Tragschiene untergreift. Dabei wird der Federabschnitt 11 entgegen seiner Federkraft ausgelenkt, so daß die in Fig. 1 dargestellte Position wieder erreicht ist.

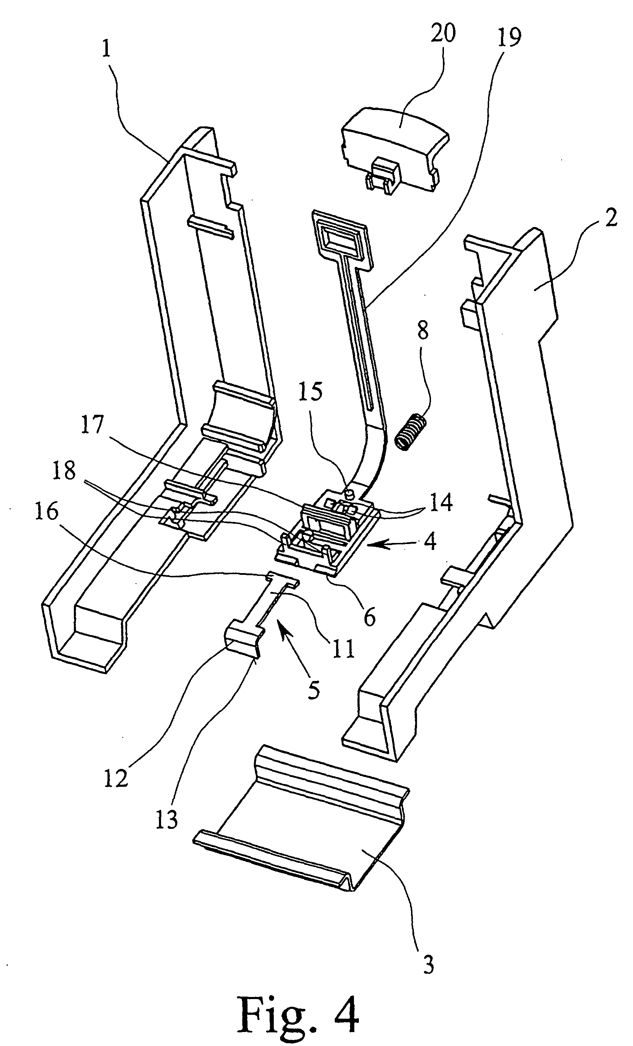

Insbesondere in Fig. 4 ist erkennbar, daß das Rückhaltelement 5 als separates Teil gefertigt ist, so daß das Rückhaltelement 5 beispielsweise einfach durch Ausstanzen hergestellt werden kann. Das Rückhaltelement 5 wird nun dadurch auf dem Verriegelungselement 4 befestigt, das das Verriegelungselement 4 zwei Rasthaken 14 und ein den Rasthaken 14 gegenüberliegendes Anschlagelement 15 aufweist, zwischen denen das T-förmige Ende 16 des Rückhaltelements 5 eingeklemmt wird. Um die senkrechte Auslenkung des Rückhaltelements 5 zu begrenzen und um ein ungewolltes Lösen des Rückhaltelements 5 von dem Verriegelungselement 4 zu verhindern, ist auf dem Verriegelungselement 4 ein torbogenförmiges Begrenzungselement 17 ausgebildet, das den Federabschnitt 11 des Rückhaltelements 5 überspannt. Darüber hinaus wird ein seitliches Lösen des Rückhaltelements 5 durch an dem Verriegelungselement 4 ausgebildete Führungsstege 18 verhindert. Auf der anderen Seite kann das Rückhaltelement 5 jedoch auch wieder von dem Verriegelungselement 4 gelöst werden, indem das T-förmige Ende 16 des Rückhaltelements 5 beispielsweise mit Hilfe eines Schraubendrehers aus den Rasthaken 14 herausgehebelt wird.

Bei der in den Fig. 1 bis 4 dargestellten Ausführungsform des erfindungsgemäßen Gehäuses ist die Betätigung des Verriegelungselements 4 dadurch besonders einfach möglich, daß das Verriegelungselement 4 mit einer Betätigungshilfe 19 verbunden ist, an deren dem Verriegelungselement 4 abgewandten Ende ein Griffabschnitt 20 angeordnet ist. Die Betätigungshilfe 19 ist dabei als flacher Steg ausgeführt, welcher entlang der Gehäusekontur geführt wird, so daß der am Ende der Betätigungshilfe 19 mittels einer Rastvorrichtung befestigte Griffabschnitt 20 von einem Benutzer einfach von der Vorderseite des Gehäuses betätigt werden kann.

## Patentansprüche

1. Gehäuse für ein elektronisches Gerät zum lösbaren Aufsetzen auf eine Tragschiene (3), mit einem in der Gehäuseunterseite angeordneten Verriegelungselement (4), wobei das Verriegelungselement (4) aus einer ersten, verriegelten Stellung, in der das Gehäuse auf der Tragschiene (3) befestigbar ist, in eine zweite, geöffnete Stellung, in der das Gehäuse von der Tragschiene (3) abhebbar ist, verbringbar ist, wobei dem Verriegelungselement (4) ein Rückhaltelement (5) zugeordnet ist und das Verriegelungselement (4) durch das Rückhaltelement (5) in der zweiten, geöffneten Stellung fixierbar ist,
**dadurch gekennzeichnet,**
**daß** das Rückhaltelement (5) einen im wesentlichen parallel zum Verriegelungselement (4) verlaufenden Federabschnitt (11) und einen im wesentlichen senkrecht dazu verlaufenden Rückhaltabschnitt (12) aufweist und daß der Federabschnitt (11) in der ersten Stellung gegen seine Federkraft ausgelenkt und in der zweiten Stellung entspannt ist und der Rückhaltabschnitt (12) in der ersten Stellung mit seiner unteren Kante (13) auf der Kante (7) der Tragschiene (3) aufsitzt und in der zweiten Stellung vor der Rastnase (6) des Verriegelungselements (4) angeordnet ist.

2. Gehäuse nach Anspruch 1, **dadurch gekennzeichnet, daß** an einen Ende des Verriegelungselements (4) eine Rastnase (6) ausgebildet ist und in der ersten Stellung des Verriegelungselements (4) die Rastnase (6) eine Kante (7) der Tragschiene (3) untergreift.

3. Gehäuse nach Anspruch 2, **dadurch gekennzeichnet, daß** dem Verriegelungselement (4) ein Federelement zugeordnet ist und das Federelement mit seiner Federkraft das Verriegelungselements (4) in der ersten Stellung gegen die Kante (7) der Tragschiene (3) drückt.

4. Gehäuse nach einem der Ansprüche 1 bis 3, **dadurch gekennzeichnet, daß** das Rückhaltelement (5) als federndes Metallteil ausgebildet ist.

5. Gehäuse nach einem der Ansprüche 1 bis 4, **dadurch gekennzeichnet, daß** das Rückhaltelement (5) auf dem Verriegelungselement (4) befestigt ist und eine Auslenkung des Federabschnitts (11) senkrecht zu dessen Längserstreckung möglich ist.

6. Gehäuse nach Anspruch 5, **dadurch gekennzeichnet, daß** die maximale senkrechte Auslenkung des Rückhaltelements (5) durch ein auf dem Verriegelungselement (4) angeordnetes Begrenzungselement (17) vorgegeben ist.

7. Gehäuse nach einem der Ansprüche 1 bis 6, **dadurch gekennzeichnet, daß** das Verriegelungselement (4) über eine Betätigungshilfe (19) betätigbar ist und die Betätigungshilfe (19) mit dem Verriegelungselement (4) mechanisch verbunden ist.

8. Gehäuse nach Anspruch 7, **dadurch gekennzeichnet, daß** an dem dem Verriegelungselement (4) abgewandten Ende der Betätigungshilfe (19) ein Griffabschnitt (20) angeordnet ist.

9. Gehäuse nach einem der Ansprüche 1 bis 6, **dadurch gekennzeichnet, daß** das Verriegelungselement (4) an seinem der Tragschiene (3) abgewandten Ende eine Ausnehmung zur Aufnahme eines Betätigungselements aufweist.

## Claims

1. Housing for an electronic device for removable mounting onto a mounting rail (3) having a locking element (4) positioned at an underside of the housing, wherein the locking element (4) is movable from a first, locked position in which the housing is locked onto the mounting rail (3) to a second, open position in which the housing can be lifted off the mounting rail (3), wherein a retaining element (5) is assigned to the locking element (4) and the locking element (4) is maintained in the second, open position by the retaining element (5) **characterized in that** the retaining element (5) has a spring section (11) extending substantially parallel to the locking element (4) and a retaining section (12) extending substantially perpendicularly thereto, the spring section (11) being deflected in the first position against an inherent spring force and relaxed in the second position, and the retaining section (12) in the first position resting with a lower edge (13) on the edge (7) of the mounting rail (3) and in the second position being positioned in front of the latch nose (6) of the locking element (4).

2. Housing according to claim 1, **characterized in that** a latch nose (6) is formed at one end of the locking element (4) and the latch nose (6) grips under the edge (7) of the mounting rail (3) in the first position of the locking element (4).

3. Housing according to claim 2, **characterized in that** a spring element is assigned to the locking element (4) and the spring element with his inherent spring force forces the locking element (4) in the first position against the edge (7) of the mounting rail (3).

4. Housing according to any one of claims 1 to 3, **characterized in that** the retaining element (5) is constructed as a resilient metal part.

5. Housing according to any one of claims 1 to 4, **characterized in that** the retaining element (5) is fastened on the locking element (4) and a deflection of the spring section (11) perpendicular to the longitudinal axis thereof is possible.

6. Housing according to claim 5, **characterized in that** the maximum vertical deflection of the retaining element (5) is limited by a limiting element (17) provided on the locking element (4).

7. Housing according to any one of claims 1 to 6, **characterized in that** the locking element (4) can be actuated by an auxiliary actuator (19) and the auxiliary actuator (19) is mechanically linked to the locking element (4).

8. Housing according to claim 7, **characterized in that** the auxiliary actuator (19) includes a gripping portion (20) on that end directed away from the locking element (4).

9. Housing according to any one of claims 1 to 6, **characterized in that** the locking element (4) at an end directed away from the mounting rail (3) includes a recess for receiving an operating member.

## Revendications

1. Boîtier pour un dispositif électronique pour montage amovible sur un profilé support (3), avec un élément de verrouillage (4) disposé dans le côté inférieur du boîtier, l'élément de verrouillage (4) pouvant être déplacé depuis une première position verrouillée, dans laquelle le boîtier peut être fixé sur le profilé support (3), dans une seconde position ouverte, dans laquelle le boîtier peut être retiré du profilé support (3), un élément de blocage (5) étant associé à l'élément de verrouillage (4) et l'élément de verrouillage (4) pouvant être fixé par l'élément de blocage (5) dans la seconde position ouverte, **caractérisé en ce que** l'élément de blocage (5) comprend une section ressort (11) s'étendant de manière sensiblement parallèle à l'élément de verrouillage (4) et une section blocage (12) s'étendant de manière sensiblement perpendiculaire à celui-ci, la section ressort (11) étant déformée à l'encontre de sa force élastique dans la première position et détendue dans la seconde position, et la section blocage (12) reposant par son arête inférieure (13) sur l'arête (7) du profilé support (3) dans la première position et étant disposée devant l'ergot d'encliquetage (6) de l'élément de verrouillage (4) dans la seconde position.

2. Boîtier selon la revendication 1, **caractérisé en ce qu'**un ergot d'encliquetage (6) est ménagé à une extrémité de l'élément de verrouillage (4) et **en ce que**, dans la première position de l'élément de verrouillage (4), l'ergot d'encliquetage (6) se place derrière une arête (7) du profilé support (3).

3. Boîtier selon la revendication 2, **caractérisé en ce qu'**un élément ressort est associé à l'élément de verrouillage (4) et **en ce que**, dans la première position, l'élément ressort pousse l'élément de verrouillage (4) par sa force de ressort contre l'arête (7) du profilé support (3).

4. Boîtier selon l'une des revendications 1 à 3, **caractérisé en ce que** l'élément de blocage (5) est réalisé sous la forme d'une pièce élastique en métal.

5. Boîtier selon l'une des revendications 1 à 4, **caractérisé en ce que** l'élément de blocage (5) est fixé sur l'élément de verrouillage (4) et **en ce qu'**une déformation de la section ressort (11) est possible perpendiculairement à l'extension longitudinale de celui-ci.

6. Boîtier selon la revendication 5, **caractérisé en ce que** la déformation verticale maximale de l'élément de blocage (5) est donnée par un élément de limitation (17) disposé sur l'élément de verrouillage (4).

7. Boîtier selon l'une des revendications 1 à 6, **caractérisé en ce que** l'élément de verrouillage (4) peut être actionné par le biais d'une aide à l'actionnement (19) et **en ce que** l'aide à l'actionnement (19) est reliée mécaniquement avec l'élément de verrouillage (4).

8. Boîtier selon la revendication 7, **caractérisé en ce qu'**une section faisant office de poignée (20) est disposée sur l'extrémité de l'aide à l'actionnement (19) opposée à l'élément de verrouillage (4).

9. Boîtier selon l'une des revendications 1 à 6, **caractérisé en ce que** l'élément de verrouillage (4) possède un évidement destiné à recevoir un élément d'actionnement à son extrémité opposée au profilé support (3).
